Europäisches Patentamt

**European Patent Office**

Office européen des brevets

(19)

(11) Numéro de publication: **0 011 514**

**A1**

(12) # DEMANDE DE BREVET EUROPEEN

(21) Numéro de dépôt: **79400008.3**

(51) Int. Cl.³: **A 01 G 15/00**

(22) Date de dépôt: **04.01.79**

(30) Priorité: **10.11.78 FR 7831789**

(43) Date de publication de la demande:
**28.05.80 Bulletin 80/11**

(84) Etats Contractants Désignés:
**BE CH DE FR GB IT**

(71) Demandeur: **Raskin, Lucile Madeleine**
**34, Rue des Chéneaux**
**F-92330 Sceaux(FR)**

(72) Inventeur: **Raskin, Lucile Madeleine**
**34, Rue des Chéneaux**
**F-92330 Sceaux(FR)**

(74) Mandataire: **Brot, Philippe**
**CABINET BROT 83, rue d'Amsterdam**
**F-75008 Paris(FR)**

(54) **Procédé et dispositif pour la coloration du sol destiné à capter l'humidité de l'air ayant pour but d'obtenir la création de nuages entraînant des précipitations dans les pays désertiques.**

(57) Les grandes surfaces désertiques pourront être fertilisées en procédant par étapes successives: à partir d'une coloration en damiers d'environ 10 Km2. Il conviendrait de commencer par colorer les surfaces cotoyant le bord de la Mer, de telle façon que les régions rendues fertiles par la retombée de pluies puissent servir de tremplin d'acheminement des évaporations maritimes. Des semences pourront être mélangées aux matières colorantes dispersées. Etant entendu que les dites matières colorantes seront choisies non toxiques pour les cultures. La coloration pourra être effectuée par hélicoptère ou tout autre moyen; soit à l'aide de matières colorantes, soit par étendues de surfaces vertes préfabriquées, laissant au fur et à mesure des pluies place à la végétation naturelle. Cette coloration peut être renforcée par l'emploi de projections lumineuses vertes.

EP 0 011 514 A1

./...

*Sable coloré + semences*

**fig 3**

TITRE MODIFIÉ
voir page de garde

- 1 -

*Procédé de coloration du sol destiné à capter l'humidité de l'air, ayant pour but d'obtenir : - La création de nuages entraînant des précipitations dans les pays désertiques , ou tout simplement un meilleur rendement agricole des terrains colorés.*

L'invention concerne un procédé de coloration du sol ayant pour but de créer une formation de nuages provoquant des précipitations sur de grandes surfaces désertiques  ou tout simplement de favoriser un meilleur captage de l'humidité atmosphérique destiné à un meilleur rendement du terrain coloré.

Dans les procédés connus de ce genre, ce résultat était envisagé soit par échauffement de l'atmosphère, à l'aide de brûleurs soit par l'utilisation de moteurs ou ventilateurs insufflant de l'air humide dans une conduite débouchant à une altitude où la vapeur se condense sous l'effet de la température soit, enfin par l'utilisation d'un dispositif producteur d'hydrogène.

Or, ces divers procédés, souvent onéreux ou complexes, ne correspondent pas toujours aux besoins des pays désertiques, dont la survie est bien souvent compromise par le manque d'eau.

Pourtant l'atmosphère est chargée d'humidité mais cependant, la répartition des retombées n'est pas identique pour toutes les régions. Prenons simplement l'exemple de la France: il est aisé de constater que la " Côte d'Azur " est bien plus épargnée par les pluies que la région normande. Observons ces deux régions ;

L'une d'elles présente une coloration " rouge "
( Massif des Maures et de l'Estérel ) tandis que
l'autre semble être un immense tapis vert. Nous pouvons être amenés à nous poser la question de savoir
si la coloration est la conséquence ou, tout au contraire la cause ayant entraîné le cycle des pluies
ou du manque de pluies. Ce phénomène peut être également observé lorsqu'une région préalablement boisée
a subi une modification morphologique par un tracé
excessif de routes et autoroutes. Des perturbations
atmosphériques, non négligeables, interviennent à
la suite de ces transformations et en sont les conséquences.

Autre observation : dans une salle de timbres où les
timbres sont classés par couleur, on peut être amené
à constater que les timbres verts collent plus facilement entre eux que les timbres rouges.

Dans le même ordre d'idées, à l'ancien CONGO BELGE,
on s'est aperçu que la culture du Pyrethre donnait
d'excellents résultats entre 1800 et 2400 mètres d'altitude, alors que des plantations effectuées dans la
savane donnaient de piètres résultats. A cette altitude, les cultures étaient noyées dans une masse de
verdure alors que la savane semblait une immense étendue aride et donc couleur sable.

Dans un local, dont les ouvertures sont exposées de
façon à recevoir un maximum d'ensoleillement, disposons deux bacs identiques, contenant chacun une même
quantité de sable. Le contenu du bac A est coloré en
rouge tandis que le contenu du bac B est coloré en
vert ( en ayant pris soin de ne faire intervenir aucune différence de composition chimique dans la fabrication des colorants employés ). Un poids de graines identique est réparti entre chacun des deux bacs. Ceci à un
demi centimètre environ au-dessous de la surface exposée
à la lumière. A égale distance des deux bacs sont disposés ... réserves d'eau, ... arrosage direct n'interve-

Aprés le coucher du soleil, la continuité de la différence de coloration est accentuée par deux éclairages simultanés, orientés vers chacun des deux bacs, à savoir un faisceau lumineux vert orienté vers le bac vert et un faisceau lumineux rouge orienté vers le bac rouge.

Après quelques jours d'observation, nous pouvons constater qu'une germination inégale apparaît. Le bac vert présentant une germination plus dense et plus avancée que le bac coloré en rouge ou que le bac témoin , neutre. L'humidité captée par le sable coloré en vert est trés nettement supérieure à celle captée par les autres. Ce résultat expérimental semble d'autant plus surprenant qu'ayant choisi comme support de preuve d'humidité la croissance des végétaux, nous étions exposés à un résultat contradictoire par l'emploi des projecteurs, à savoir :
- pendant le jour, la germination dans le bac coloré en vert était favorisée par un captage supérieur d' humidité ( un des facteurs de croissance des végétaux ) tandis que la nuit la projection de lumière rouge favorisait le dégagement d'oxygène des plantes situées dans le bac rouge ( absorption lumineuse supérieure prouvée par le biologiste TIMIRIAZEFF ), ces deux facteurs s'équilibrant les résultats auraient dû être sensiblement les mêmes.

Sur de grandes surfaces, la coloration du sol va faire varier l'ALBEDO de la région traitée.Or, l'albedo des forêts ( régions les plus arrosées ) est,d'après la SMITHSONIAN Institution de Washington , situé entre 3 et 10 alors que celui des déserts ( régions les moins arrosées ) est situé entre 24 et 28.Les champs, suivant les cultures ensemensées voient leur albedo varier entre 3 et 25 .

00115I4

| FORETS | ZONES DESERTIQUES |
|--------|-------------------|

3...10 ——— ALBEDO ——— 24...28

⟨—— Température ——⟩
⟨—— Humidité ——⟩

Coloration des zones désertiques

⬇

— Diminution de l'albedo

— Augmentation de l'humidité captée

— Abaissement de la température

⬇

Transfert des trois facteurs essentiels propres aux zones forestières, sur les régions traitées.

Il est à noter que dans les zones désertiques les rares orages se déclarent la nuit ( Albedo presque nul ).

Deux applications pratiques découlent de ces observations:

I. Les régions désertiques bordant les mers chaudes salées pourront être rendues fertiles par simple coloration du sol.

II. Les surfaces plus petites pourront avoir un rendement de culture supérieur par simple coloration de la surface ensemencée.

Le dispositif, objet de l'invention devra être appliqué suivant le processus suivant :

COLORATION DU SOL

Grandes surfaces ➡ condensation de l'humidité au niveau du sol ⟶ pluies.

Petites surfaces ➡ meilleur captage humide ➡ rendement accru

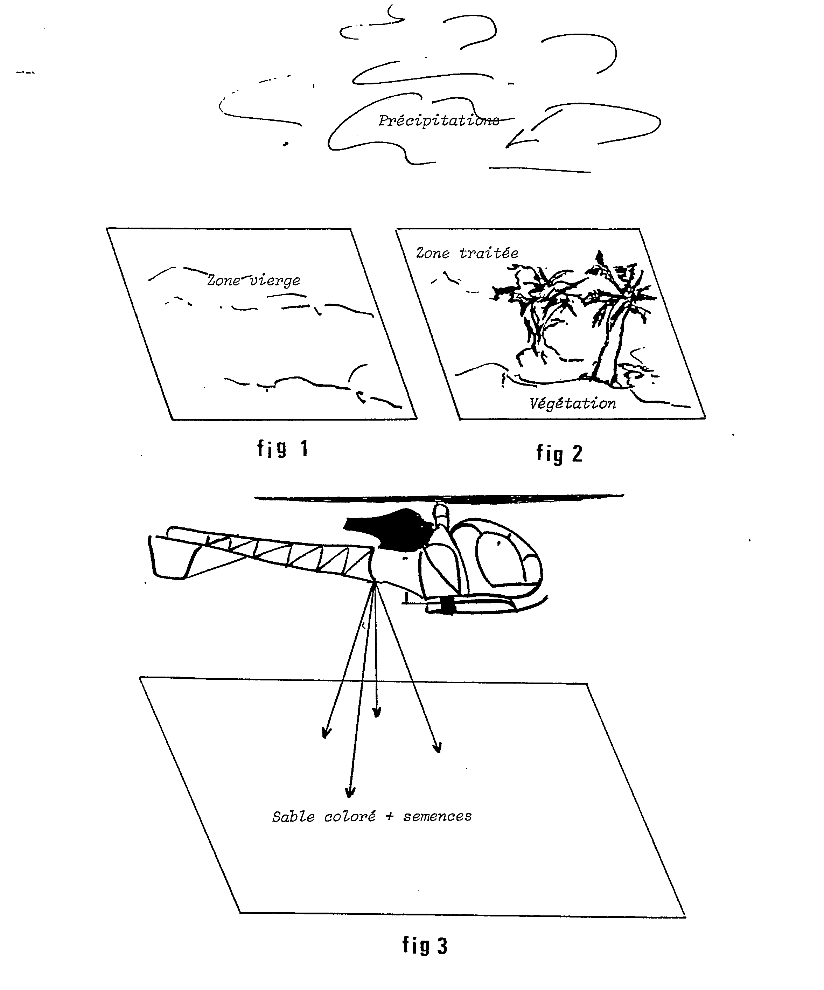

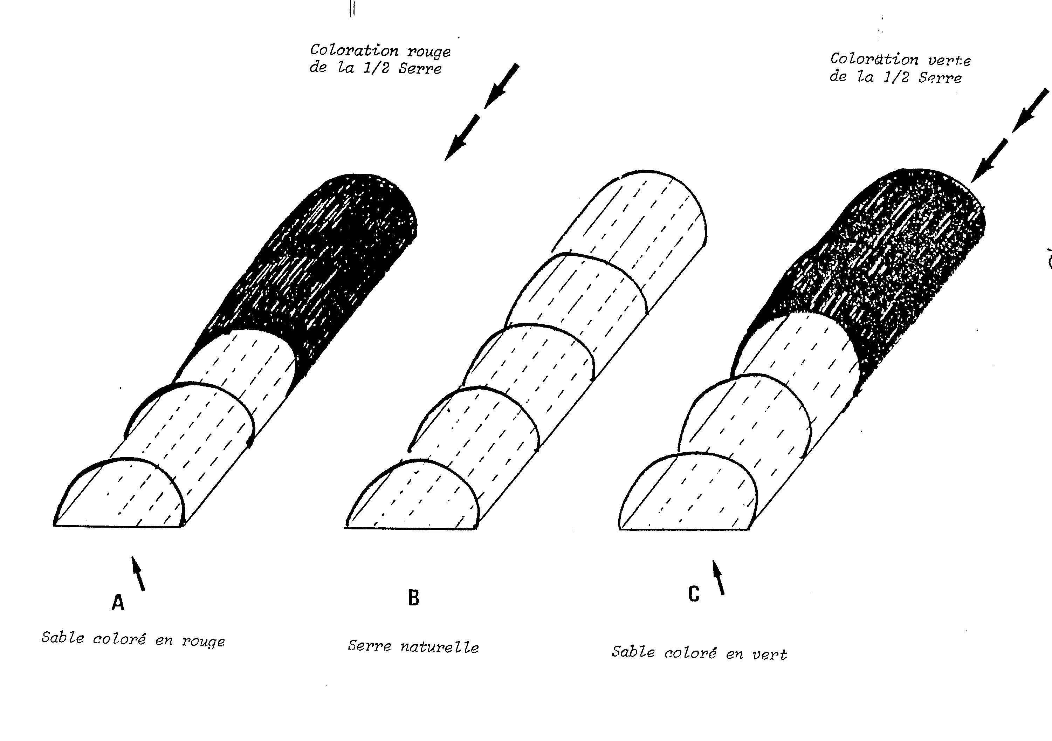

# REVENDICATIONS

1°) Procédé de coloration du sol ayant pour but de créer une formation de nuages provoquant des précipitations sur de grandes surfaces désertiques et de favoriser un meilleur captage de l'humidité atmosphérique, sur des surfaces plus petites.

2°) Dispositif selon la revendication 1 caractérisé par l'emploi de matières colorantes ou tout autre moyen destiné à donner au sol l'apparence verte, y compris procédé lumineux, devant entraîner la fertilisation des sols par captage de l'humidité et chute de précipitations.

*Précipitations*

Zone vierge

Zone traitée

*Végétation*

**fig 1**

**fig 2**

*Sable coloré + semences*

**fig 3**

Coloration verte de la 1/2 Serre

Coloration rouge de la 1/2 Serre

C

B

A

Sable coloré en vert

Serre naturelle

Sable coloré en rouge

Office européen **RAPPORT DE RECHERCHE EUROPEENNE**

des brevets

Numero de la demande

EP 79 40 00

| Categorie | Citation du document avec indication, en cas de besoin, des parties pertinentes | Revendica-tion concernee |
|---|---|---|
| | FR - A - 1 330 482 (ESSO RESEARCH AND ENGINEERING COMPANY) * page 2, colonne de droite, para-graphe 3 à page 3, colonne de droite, paragraphe 1; figure 5 * | 1 |

**DOCUMENTS CONSIDERES COMME PERTINENTS**

**CLASSEMENT DE LA DEMANDE (Int Cl.²)**

A 01 G 15/0

**DOMAINES TECHNIQUES RECHERCHES (Int. Cl.²)**

A 01 G

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interference
D: document cite dans la demande
L: document cité pour d'autres raisons

&: membre de la même famille document correspondant

Le présent rapport de recherche a été établi pour toutes les revendications

| Lieu de la recherche | Date d'achèvement de la recherche | Examinateur |
|---|---|---|
| La Haye | 25-6-1979 | Heri _____ |

OEB Form 1503.1   06.78